# EUROPÄISCHE PATENTANMELDUNG

(11) **EP 1 615 006 A1**
(43) Veröffentlichungstag der Anmeldung: **11.01.2006**
(21) Anmeldenummer: 05009739.3
(22) Anmeldetag: 04.05.2005
(51) Int. Cl.: G01F 23/00, G01F 23/36

(54) **Anordnung zur Erfassung und Anzeige eines Flüssigkeitsvolumens und Verwendung der Anordnung**

(30) Priorität: 08.07.2004 DE 102004033052
(71) Anmelder: REHAU AG + Co, 95111 Rehau (DE)
(72) Erfinder: Zielke, Peter, 08626 Adorf (DE); Hirath, Jürgen, 95448 Bayreuth (DE)

(57) **Zusammenfassung**

Die Anordnung dient zur Erfassung und Anzeige eines Volumens einer Flüssigkeit (3), die sich in einem Behälter (2) befindet und zur Speisung einer ersten und zweiten Anwendung dient. Dabei benötigt die erste Anwendung ein erstes Mindestvolumen und die zweite Anwendung ein zweites Mindestvolumen. Die Anordnung umfasst eine Sensoreinheit (4) zur Erfassung eines Füllstands der Flüssigkeit (3). Außerdem sind an die Sensoreinheit (4) angeschlossene Auswertemittel zur Erzeugung eines ersten Anzeigesignals (L1), wenn der erfasste Füllstand nicht über einem dem ersten Mindestvolumen entsprechenden ersten Grenzwert (14) liegt, und eines zweiten Anzeigesignals (L2), wenn der erfasste Füllstand nicht über einen dem zweiten Mindestvolumen entsprechenden zweiten Grenzwert (15) liegt, vorgesehen. Weiterhin umfasst die Anordnung eine an die Auswertemittel (10) angeschlossene Anzeigeeinheit (11) zur Anzeige des ersten und des zweiten Anzeigesignals (L1, L2).

## Beschreibung

Die Erfindung betrifft eine Anordnung zur Erfassung und Anzeige eines Volumens einer in einem Behälter befindlichen Flüssigkeit sowie eine Verwendung dieser Anordnung.

Beim Betrieb eines Kraftfahrzeugs werden verschiedene Flüssigkeiten, wie z. B. Treibstoff, Motor- oder Getriebeöl, Kühlwasser oder auch eine Reinigungsflüssigkeit für die (Front-/Heck-)Scheibe und die Scheinwerfer, benötigt. Diese Flüssigkeiten werden für den jeweiligen Anwendungszweck den Vorratsbehältern entnommen, sodass der Füllstand und auch das Volumen der Flüssigkeiten in diesen Behältern variieren.

Es sind verschiedene Anordnungen zur Erfassung des Füllstands und/oder des Volumens einer in einem Behälter befindlichen Flüssigkeit bekannt. So wird in der DE 101 56 479 A1 eine kontinuierliche Füllstandserfassung mittels eines Schwimmers, dessen Position magnetisch und damit berührungslos von einem Hall-Sensor detektiert wird, beschrieben. Weiterhin wird mit der DE 100 53 592 A1 eine Anordnung zur Erfassung und Anzeige des Füllstands in einem Behälter für eine Reinigungsflüssigkeit (= Waschwasser) offenbart. Der Füllstand wird resistiv mittels zweier Elektrodenpaare erfasst. Nach einer Auswertung der erfassten Signale wird ein den Füllstand kontinuierlich wiedergebendes Signal zur Anzeige gebracht.

Weitere Prinzipien zur Füllstands- oder Volumenerfassung, die beispielsweise kapazitiv funktionieren oder auf einer Laufzeiterfassung einer reflektierten Wanderwelle beruhen oder eine Vielzahl einzelner Sensoren beinhalten, sind ebenfalls bekannt.

Die bekannten Anordnungen werden in ihrer technischen Umsetzung aufwendig, wenn mit der Flüssigkeit mehr als eine Anwendung gespeist wird und für jede Anwendung ein maßgeblicher Füllstand oder ein maßgebliches Volumen angezeigt werden soll.

Die Aufgabe der Erfindung besteht deshalb darin, eine Anordnung der eingangs bezeichneten Art in der Gestalt anzugeben, dass das Volumen einer zur Speisung mehr als einer Anwendung vorgesehenen Flüssigkeit in einfacher Weise erfasst und angezeigt wird.

Diese Aufgabe wird erfindungsgemäß durch eine Anordnung mit den Merkmalen des Anspruchs 1 gelöst. Die Anordnung gestaltet sich insbesondere deshalb sehr einfach, weil zur Erfassung des Füllstands nur eine einzige Sensoreinheit vorgesehen ist, obwohl die in dem Behälter befindliche Flüssigkeit zur Speisung mindestens zweier verschiedener Anwendungen dient, für die das jeweils erforderliche Mindestvolumen zur Anzeige gebracht wird. Die mindestens zwei Mindestvolumina, die mittels der Anordnung überwacht werden, sind im Allgemeinen verschieden voneinander. Auch die Anzeigeeinheit ist einfach ausgebildet, da lediglich ein Erreichen oder Unterschreiten des ersten und/oder des zweiten Grenzwerts angezeigt wird. Dies kann beispielsweise mittels zweier Kontrollleuchten erfolgen. Eine aufwendige Anzeigeskala ist demgegenüber nicht erforderlich. Der Anwender erhält somit nur dann eine Information, wenn die Flüssigkeitsmenge im Behälter unter eine der beiden oder beide kritische Grenzen bzw. Grenzwerte fällt. Nur in diesen Fällen benötigt der Anwender die Information auch tatsächlich, da er dann die notwendigen Gegenmaßnahmen ergreifen sollte. Viele Anwendungsfälle erfordern keine Information an den Anwender in den übrigen Situationen. Der Anwender wird vor einer überflüssigen Informationsflut bewahrt und nicht unnötig in seiner Aufmerksamkeit beansprucht. Die erfindungsgemäße Anordnung zeichnet sich durch eine exakte, insbesondere kontinuierliche, Füllstandserfassung bei gleichzeitig reduziertem Anzeige-Informationsgehalt aus. Es ergibt sich außerdem eine sehr preiswerte Lösung.

Vorteilhafte Ausgestaltungen der Erfindung ergeben sich aus den von Anspruch 1 abhängigen Unteransprüchen.

Die Varianten gemäß den Ansprüchen 2 bis 8 bewirken jeweils eine besonders einfache Umsetzung des erfassten Messsignals für den Füllstand in die beiden Anzeigesignale. Insbesondere ist die jeweils verwendete Auswertung mit einfachen Mitteln zu realisieren.

So kann insbesondere mittels der Variante nach Anspruch 2 eine praktisch unmittelbare Umsetzung des erfassten Messsignals in ein elektrisches Signal erfolgen, das sich sehr leicht weiterverarbeiten und insbesondere auch direkt anzeigen lässt. Die beanspruchte Schalteinheit mit mindestens drei verschiedenen Schaltstellungen, also mit mindestens zwei Schaltpunkten, ermöglicht dies in einfacher Weise.

Die Varianten gemäß den Ansprüchen 3 bis 7 zeichnen sich durch einen einfachen elektrischen Aufbau aus. Es werden nur elektrische Standard-Bauelemente verwendet. Außer den gemäß Anspruch 3 vorgesehenen beiden elektrischen Schaltern sind bei der weiteren Variante gemäß Anspruch 5 zwei elektrische Widerstände vorgesehen. Sowohl die elektrischen Schalter als auch die elektrischen Widerstände sind Massenprodukte und dementsprechend einfach und preiswert zu beschaffen.

Die Variante gemäß Anspruch 7 kommt mit einem besonders geringen technischen Realisierungsaufwand aus. Es erfolgt lediglich eine Umschaltung zwischen verschiedenen Leitungen, wobei außer den elektrischen Schaltern, der Quelle und den Leitungen keine weiteren Komponenten benötigt werden.

Die Ausgestaltung gemäß Anspruch 9 beinhaltet eine Sensoreinheit, die aufgrund des Schwimmers mit einfachen mechanischen Mitteln zu realisieren ist und dennoch eine gute und insbesondere kontinuierliche Erfassung des Füllstands ermöglicht.

Eine weitere Aufgabe der Erfindung besteht darin, eine bevorzugte Anwendung der Anordnung anzugeben.

Diese Aufgabe wird gelöst durch die Merkmale des Anspruchs 10. Bevorzugt lässt sich die Anordnung zur Erfassung und Anzeige des Fülligkeitsvolumens einsetzen, wenn mit der Flüssigkeit sowohl eine Scheinwerferreinigungseinrichtung als auch eine Scheibenwascheinrichtung eines Kraftfahrzeugs gespeist werden. Für beide Einrichtungen sind jeweils unterschiedliche Mindestvolumina an (Reinigungs-)Flüssigkeit erforderlich. Die Anordnung eignet sich damit in besonderer Weise zur Anzeige des Unterschreitens der jeweils zugehörigen Grenzwerte.

Weitere Merkmale, Vorteile und Einzelheiten der Erfindung ergeben sich aus der nachfolgenden Beschreibung mehrerer Ausführungsbeispiele anhand der Zeichnung. In dieser zeigen:
- Fig. 1: ein erstes Ausführungsbeispiel einer Erfassungs- und Anzeigeanordnung,
- Fig. 2: ein zweites Ausführungsbeispiel einer Erfassungs- und Anzeigeanordnung, und
- Fig. 3: ein drittes Ausführungsbeispiel einer Erfassungs- und Anzeigeanordnung.

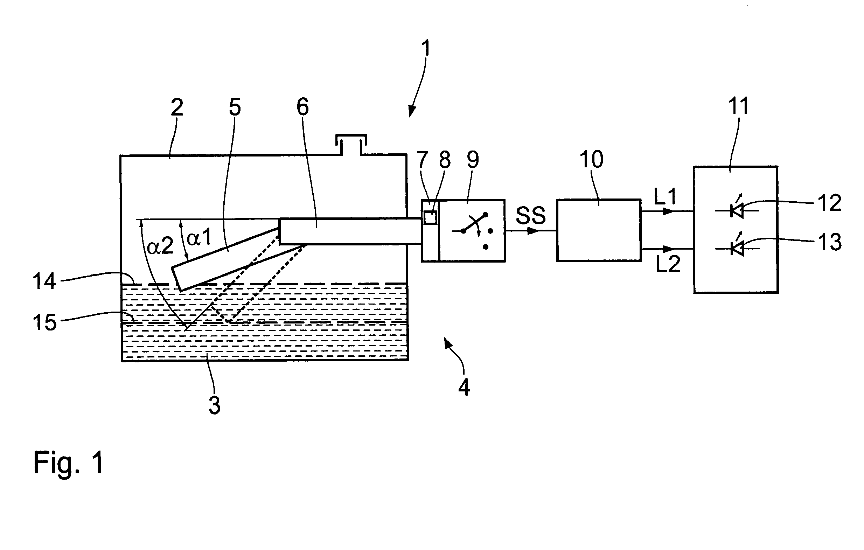

Einander entsprechende Teile sind in den Figuren 1 bis 3 mit denselben Bezugszeichen versehen.

In Figur 1 ist ein Beispiel einer Erfassungs- und Anzeigeanordnung 1 gezeigt, die in einem nicht näher dargestellten Kraftfahrzeug platziert ist. Ein Vorratsbehälter 2, in dem sich eine Reinigungsflüssigkeit 3 befindet, ist ebenfalls Bestandteil dieses Kraftfahrzeugs. Eine Sensoreinheit 4 reicht mittels eines Schwimmers 5 und eines Teils einer Übertragungsmechanik 6 in das Innere des Vorratsbehälters 2. Der Schwimmer 5 ist schwenkbar an der Übertragungsmechanik 6 gelagert. Außerhalb des Vorratsbehälters 2 ist eine zur Sensoreinheit 4 gehörende Wandlereinheit 7 angeordnet, die mittels der Übertragungsmechanik 6 mit dem Schwimmer 5 verbunden ist. Die Wandlereinheit 7 beinhaltet einen Magneten 8. Sie ist an eine im ersten Ausführungsbeispiel ebenfalls zur Sensoreinheit 4 gehörende Schalteinheit 9 gekoppelt. Die Schalteinheit 9 ist mittels einer Umsetzeinheit 10 elektrisch an eine Anzeigeeinheit 11, die zwei Kontrollleuchten in Gestalt einer ersten gelben LED (= Leuchtdiode) 12 und einer zweiten roten LED 13 aufweist, angeschlossen.

Im Folgenden wird die Funktionsweise der Erfassungs- und Anzeigeanordnung 1 beschrieben.

Die Reinigungsflüssigkeit 3 dient zur Speisung zweier Anwendungen. Mit ihr werden zum einen eine Scheinwerferreinigungseinrichtung und zum anderen eine Scheibenwascheinrichtung betrieben.

Während des Betriebs dieser beiden in Figur 1 nicht dargestellten Einrichtungen wird ein Teil der Reinigungsflüssigkeit 3 aus dem Vorratsbehälter 2 entnommen. Dadurch sinkt das Volumen und auch der Füllstand der im Vorratsbehälter 2 vorhandenen Reinigungsflüssigkeit 3.

Der Schwimmer 5 ist zur Erfassung des Füllstands vorgesehen. Je nach aktuellem Füllstand nimmt der Schwimmer 5 eine spezifische Schwenkstellung ein. Eine in Folge einer Flüssigkeitsentnahme geänderte Schwenkstellung wirkt mittels der Übertragungsmechanik 6 auch auf den Magneten 8, sodass ein verändertes Magnetfeld resultiert. Die Magnetfeldänderung wird durch einen nicht näher dargestellten Sensor, beispielsweise einen Hall-Sensor, detektiert und in ein elektrisches Sensorsignal umgewandelt, das zur Ansteuerung der Schalteinheit 9 dient.

Um einen ordnungsgemäßen Betrieb der beiden Anwendungen zu gewährleisten, sind unterschiedliche Mindestvolumina der Reinigungsflüssigkeit 3 erforderlich. Für einen ordnungsgemäßen Betrieb der ersten Anwendung, also der Scheinwerferreinigungseinrichtung, darf der Füllstand der Reinigungsflüssigkeit 3 höchstens bis zu einem ersten Grenzwert 14 fallen. Für die zweite Anwendung, also für die Scheibenwascheinrichtung, muss der Füllstand über einem zweiten Grenzwert 15 liegen. Beide Grenzwerte 14 und 15 unterscheiden sich durch eine Differenzmenge an Reinigungsflüssigkeit 3 von etwa 1 Liter.

Gemäß der Darstellung von Figur 1 reicht die aktuelle Befüllung des Vorratsbehälters 2 mit der Reinigungsflüssigkeit 3 gerade bis zu dem ersten Grenzwert 14. Die Position des Schwimmers ist in diesem Zustand durch einen ersten Schwenkwinkel α1 gekennzeichnet. Sinkt der Füllzustand dagegen bis zum niedrigeren Grenzwert 15, nimmt der Schwimmer die in Figur 1 gestrichelt angedeutete Position bei einem zweiten Schwenkwinkel α2 ein.

Die Sensoreinheit 4 erfasst den Füllstand der Reinigungsflüssigkeit 3 kontinuierlich. Sobald ein Schwenkwinkel vorliegt, der kleiner oder gleich dem ersten Schwenkwinkel α1 oder dem zweiten Schwenkwinkel α2 ist, wird die an die Wandlereinheit 7 angekoppelte Schalteinheit 9 zu einer Umschaltung veranlasst.

Die Schalteinheit 9 hat drei Schaltstellungen entsprechend den drei wesentlichen Befüllungszuständen des Vorratsbehälters - nämlich:
1) Füllstand > erster Grenzwert 14;
2) erster Grenzwert 14 ≥ Füllstand > zweiter Grenzwert 15;
3) Füllstand ≤ zweiter Grenzwert 15.

Ein von der Schalteinheit 9 generiertes Schaltstellungssignal SS wird von der Umsetzeinheit 11 in ein erstes und/oder zweites Anzeigesignal L1 bzw. L2 umgesetzt, die zur Ansteuerung der ersten bzw. zweiten LED 12 bzw. 13 dienen. Erreicht der Füllstand den ersten Grenzwert 14, leuchtet also die erste LED 12 auf, wohingegen bei Erreichen des zweiten Grenzwerts 14 auch zusätzlich die zweite LED 13 zu leuchten beginnt. Es liegt eine funktionsgerechte notwendige Anzeige vor. Der Lenker des Kraftfahrzeugs wird nur auf das Absinken des Füllstands unter die beiden markanten Grenzwerte 14 und 15 hingewiesen. Weitere Informationen, die im Zusammenhang mit der Reinigungsflüssigkeit 3 überflüssig sind und die Aufmerksamkeit des Kraftfahrzeug-Lenkers nur unnötigerweise beanspruchen würden, werden nicht gegeben.

Bei Aufleuchten der ersten LED 12 weiß der Kraftfahrzeug-Lenker, dass die Scheinwerfer des Kraftfahrzeugs nicht mehr gesäubert werden können, sodass sich die Lichtintensität für die Fahrbahnausleuchtung reduzieren und der Gegenverkehr durch Streulicht geblendet werden kann. Dagegen bleibt die Möglichkeit zur Reinigung der Frontscheibe nach wie vor erhalten. Dies ist für ein sicheres Lenken des Kraftfahrzeugs erforderlich und damit eine wichtige Information. Bei Aufleuchten auch der zweiten LED 13 ist auch diese wichtige Funktion nicht mehr gewährleistet und der Kraftfahrzeug-Lenker ist gehalten, den Vorratsbehälter 2 mit Reinigungsflüssigkeit 3 nachzufüllen.

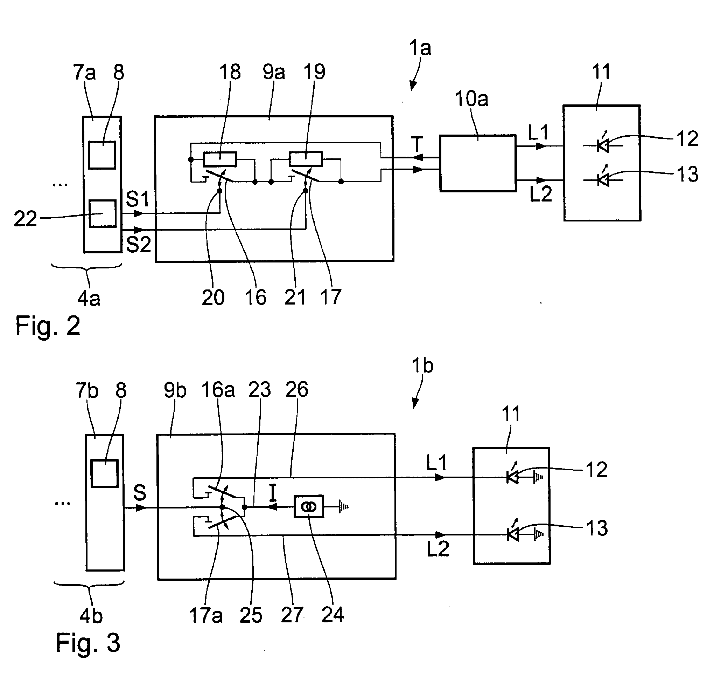

In Figur 2 ist ein zweites Ausführungsbeispiel einer Erfassungs- und Anzeigeanordnung 1a dargestellt, wobei der Vorratsbehälter 2 mit der Reinigungsflüssigkeit 3 und dem Schwimmer 5 aus Übersichtlichkeitsgründen weggelassen ist. Ein Unterschied zum ersten Ausführungsbeispiel nach Figur 1 besteht darin, dass die Schalteinheit 9a nicht als bauliche Einheit mit der Wandlereinheit 7a ausgeführt ist und damit auch keinen Bestandteil der Sensoreinheit 4a ist. Die Schalteinheit 9a und die Umsetzeinheit 10a bilden Auswertemittel, die zur Überführung zweier an zwei Ausgängen der Wandlereinheit 7a anstehender Sensorsignale S1 und S2 in die beiden Anzeigesignale L1 bzw. L2 dienen.

Die Schalteinheit 9a besteht im Wesentlichen aus einer Serienschaltung zweier Schalter 16 und 17, die jeweils mit einem elektrischen Widerstand 18 bzw. 19 überbrückt sind. Die beiden Schalter 16 und 17 haben jeweils einen Schaltkontakt 20 bzw. 21, von denen jeder mit einem der beiden Ausgänge der Wandlereinheit 7a elektrisch leitend verbunden ist. Die Reihenschaltung der beiden elektrisch überbrückten Schalter 16 und 17 ist zweipolig, also mittels zweier elektrischer Leitungen, an die Umsetzeinheit 10a angeschlossen.

Außerdem beinhaltet die Wandlereinheit einen Kontaktgeber 22.

Im Folgenden wird die Funktionsweise der Erfassungs- und Anzeigeanordnung 1a und insbesondere die der Schalteinheit 9a näher beschrieben.

Die Umsetzeinheit 10a speist ein Abfragesignal T in die Schalteinheit 9a ein. Je nach Schaltstellung der beiden Schalter 16 und 17 erfährt das Abfragesignal T einen anderen Spannungsabfall. Sind beide Schalter 16 und 17 geöffnet, fällt an beiden Widerständen 18 und 19 eine Spannung ab. Bei geschlossenem Schalter 16 erfolgt dagegen nur am Widerstand 19 ein Spannungsabfall, wohingegen bei geschlossenen Schaltern 16 und 17 praktisch kein Spannungsabfall in der Schalteinheit 9a auftritt. In der Umsetzeinheit 10a erfolgt eine Rekonstruktion der Schaltstellung der Schalteinheit 9a anhand einer einfachen Spannungsmessung. Im Anschluss werden dementsprechende Anzeigesignale L1 und L2 generiert.

Der Kontaktgeber 22 generiert je nach erfasstem Füllstand das erste Sensorsignal S1, wenn der erste Grenzwert 14 erreicht oder unterschritten wird und zusätzlich das zweite Sensorsignal S2 generiert, wenn auch der zweite Grenzwert 15 erreicht oder unterschritten wird. Insgesamt wird damit die im Zusammenhang mit dem ersten Ausführungsbeispiel beschriebenen Wirkung erzielt.

Bei einem dritten Ausführungsbeispiel einer Erfassungs- und Anzeigeanordnung 1 b gemäß Figur 3 bestehen die Auswertemittel nur aus einer verglichen mit dem zweiten Ausführungsbeispiel modifizierten Schalteinheit 9b. Letztere ist praktisch als kombinierte Schalt-/Umsetzeinheit ausgebildet. Eine gesonderte Umsetzeinheit 10 oder 10a ist nicht erforderlich.

Die Schalteinheit 9b beinhaltet zwei im Wesentlichen parallel geschaltete Schalter 16a und 17a, die über eine gemeinsame Zuleitung 23 an eine gemeinsame Stromquelle 24 angeschlossen sind. Ein gemeinsamer Schaltkontakt 25 beider Schalter 16a und 17a ist elektrisch leitend mit einem Ausgang der Wandlereinheit 7b verbunden. Zwei an die Schalter 16a und 17a angeschlossene Ableitungen 26 bzw. 27 führen unmittelbar an die erste bzw. zweite LED 12 bzw. 13. Im Unterschied zur zweipoligen Auswertung beim zweiten Ausführungsbeispiel erfolgt die Auswertung der Schaltstellung beim dritten Ausführungsbeispiel also dreipolig über die Zuleitung 23 und die beiden Ableitungen 26 und 27.

Im Folgenden wird die Funktionsweise der Erfassungs- und Anzeigeanordnung 1b gemäß dem dritten Ausführungsbeispiel der Erfindung näher beschrieben.

Die Stromquelle 24 liefert ein eingeprägtes Stromsignal I, das je nach Schaltstellung der beiden Schalter 16a und 17a unmittelbar als erstes Anzeigesignal L1 oder auch als zweites Anzeigesignal L2 der ersten LED 12 bzw. der zweiten LED 13 zugeführt wird. Sind beide Schalter 16a und 17a geöffnet, wird das Stromsignal 1 nicht weitergeleitet und keine der beiden LEDs 12 und 13 leuchtet.

Die Wandlereinheit 7b umfasst im Unterschied zum zweiten Ausführungsbeispiel keinen Kontaktgeber 22. Sie liefert stattdessen ein Sensorsignal S, das im Wesentlichen proportional zum erfassten Füllstand ist. Die beim dritten Ausführungsbeispiel eingesetzten Schalter 16a und 17a haben eine unterschiedliche Ansprechcharakteristik, sodass der erste Schalter 16a früher - nämlich wenn der Füllstand den ersten Grenzwert 14 erreicht - und der zweite Schalter 17a später - nämlich wenn der Füllstand den zweiten Grenzwert 15 erreicht - geschlossen wird. Ausgangspunkt ist hierbei ein Vorratsbehälter 2 mit maximaler Befüllung der Reinigungsflüssigkeit 3, deren Füllstand durch Entnahme für die Anwendungen sinkt. Grundsätzlich können die Schalter 16a und 17a jedoch auch wie beim zweiten Ausführungsbeispiel eine im Wesentlichen identische Ansprechcharakteristik aufweisen und dafür mit getrennten Sensorsignalen S1 und S2 angesteuert werden.

Insgesamt wird also auch mit der Erfassungs- und Anzeigeanordnung 1b gemäß dem dritten Ausführungsbeispiel die gleiche Wirkungsweise wie bei den beiden vorher beschriebenen Ausführungsbeispielen erreicht.

## Patentansprüche

1. Anordnung zur Erfassung und Anzeige eines Volumens einer in einem Behälter (2) befindlichen Flüssigkeit (3), die zur Speisung mindestens einer ersten ein erstes Mindestvolumen der Flüssigkeit (3) benötigenden Anwendung und einer zweiten ein zweites Mindestvolumen der Flüssigkeit (3) benötigenden Anwendung vorgesehen ist, umfassend:
- eine Sensoreinheit (4; 4a; 4b) zur Erfassung eines Füllstands der Flüssigkeit (3),
- an die Sensoreinheit (4; 4a; 4b) angeschlossene Auswertemittel (10; 9a, 10a; 9b) zur Erzeugung eines ersten Anzeigesignals (L1), wenn der erfasste Füllstand nicht über einem dem ersten Mindestvolumen entsprechenden ersten Grenzwert (14) liegt, und eines zweites Anzeigesignals (L2), wenn der erfasste Füllstand nicht über einem dem zweiten Mindestvolumen entsprechenden zweiten Grenzwert (15) liegt, und
- eine an die Auswertemittel (10; 9a, 10a; 9b) angeschlossene Anzeigeeinheit (11) zur Anzeige des ersten und des zweiten Anzeigesignals (L1, L2).

2. Anordnung nach Anspruch 1, **dadurch gekennzeichnet, dass** eine Schalteinheit (9; 9a; 9b) mit mindestens drei verschiedenen Schaltstellungen als Bestandteil der Sensoreinheit (4) oder der Auswertemittel vorgesehen ist, wobei eine Änderung der Schaltstellung erfolgt, wenn der von der Sensoreinheit (4; 4a; 4b) erfasste Füllstand den ersten oder den zweiten Grenzwert (14, 15) erreicht.

3. Anordnung nach Anspruch 2, **dadurch gekennzeichnet, dass** die Schalteinheit (9a; 9b) zwei elektrische Schalter (16, 17; 16a, 17a) beinhaltet.

4. Anordnung nach Anspruch 3, **dadurch gekennzeichnet, dass** die zwei Schalter (16, 17) in Reihe geschaltet sind.

5. Anordnung nach Anspruch 3, **dadurch gekennzeichnet, dass** zu jedem der beiden Schalter (16, 17) jeweils ein elektrischer Widerstand (18, 19) parallel geschaltet ist.

6. Anordnung nach Anspruch 3, **dadurch gekennzeichnet, dass** die zwei Schalter (16a, 17a) parallel geschaltet sind.

7. Anordnung nach Anspruch 3 oder 6, **dadurch gekennzeichnet, dass** eine ein Quellsignal (I) erzeugende Quelle (24) mittels zweier Leitungen (26, 27) an die Anzeigeeinheit (11) angeschlossen ist und in jeder der beiden Leitungen (26, 27) jeweils einer der beiden Schalter (16a, 17a) angeordnet ist.

8. Anordnung nach Anspruch 2, **dadurch gekennzeichnet, dass** die Auswertemittel eine Umsetzeinheit (10; 10a) beinhalten, die je nach Schaltstellung kein Anzeigesignal oder nur das erste Anzeigesignal (L1) oder das erste und das zweite Anzeigesignal (L1, L2) erzeugt.

9. Anordnung nach Anspruch 1, **dadurch gekennzeichnet, dass** die Sensoreinheit (4) einen schwenkbar gelagerten Schwimmer (5) beinhaltet, und die Erfassung des Füllstands mittels der Erfassung einer Schwenkstellung des Schwimmers (5) erfolgt.

10. Verwendung der Anordnung nach einem der vorhergehenden Ansprüche in einem Kraftfahrzeug zur Erfassung und Anzeige einer Reinigungsflüssigkeit (3), wobei als erste Anwendung eine Scheinwerferreinigungseinrichtung und als zweite Anwendung eine Scheibenwascheinrichtung gespeist wird.
